# EUROPEAN PATENT APPLICATION

(11) **EP 2 629 252 A1**
(43) Date of publication of application: **21.08.2013**
(21) Application number: 13155363.8
(22) Date of filing: 15.02.2013
(51) Int. Cl.: G06Q 10/06, G06Q 30/04

(54) **Power cost converting apparatus, power plan supporting apparatus, and computer readable storage medium**

(30) Priority: 17.02.2012 JP 2012033301
(71) Applicant: Eneres Co., Ltd., Tokyo 120-0034 (JP)
(72) Inventor: Ikeda, Motohide, Tokyo, 120-0034 (JP); Watanabe, Ken, Tokyo, 120-0034 (JP); Nagao, Taka, Tokyo, 120-0034 (JP)
(74) Representative: TBK

(57) **Abstract**

Due to the period during which energy reduction is performed, the benefit to society caused by the energy reduction can differ. Provided is a power cost converting apparatus comprising a power difference information acquiring section that acquires power difference amount information indicating a power difference amount between a planned power amount planned in advance for one unit interval and a power usage amount that is actually used during the one unit interval; and a power cost converting section that converts the power difference amount indicated by the power difference amount information into an index value indicating worth of the power difference amount in the one unit interval, based on a predetermined conversion coefficient determined according to the power cost during the one unit interval.

## Description

### BACKGROUND

### 1. TECHNICAL FIELD

The present invention relates to a power cost converting apparatus and a power plan supporting apparatus that supports a power usage plan of a power consumer.

### 2. RELATED ART

Citation 1 discloses an energy management support apparatus that proposes how much to restrict energy consumption for each remaining day in a short period while comprehending the energy consumption state from the beginning to the current time, thereby creating an environment in which energy conservation goals can be easily achieved.
Patent Document 1: Japanese Patent Application Publication No. 2008-102708

With the energy management supporting apparatus described in Citation 1, the energy reduction amount over the course of a year can be known, for example. However, even if the energy reduction amount is the same, a power consumer which has decreased the energy in a period during which power demand is high provides a greater benefit to society than a power consumer which has decreased the energy in a period during which power demand is low. In other words, depending on the period during which the energy is reduced, the benefit to society resulting from the energy reduction is different.

### SUMMARY

According to a first aspect of the innovations, provided is a power cost converting apparatus comprising a power difference information acquiring section that acquires power difference amount information indicating a power difference amount between a planned power amount planned in advance for one unit interval and a power usage amount that is actually used during the one unit interval; and a power cost converting section that converts the power difference amount indicated by the power difference amount information into an index value indicating worth of the power difference amount in the one unit interval, based on a predetermined conversion coefficient determined according to the power cost during the one unit interval.

The power cost converting apparatus may further comprise a conversion coefficient holding section that holds the conversion coefficient for each unit interval, and the conversion coefficient is determined according to at least one of power demand during the one unit interval corresponding to the conversion coefficient, power price during the one unit interval corresponding to the conversion coefficient, and meteorological conditions during the one unit interval corresponding to the conversion coefficient.

According to a second aspect of the innovations, provided is a power plan supporting apparatus comprising the power cost converting apparatus; and a compensation information registering section that, when the power difference amount information indicates that the power usage amount is less than the planned power amount, registers the index value in the compensation information holding section as a conversion value that can enable another power consumer, which is different from the power consumer using the power usage amount, to convert the power difference amount into a compensation power amount usable by the other power consumer by being added to another planned power amount of the other power consumer planned in advance for another unit interval that is later than the one unit interval.

The power plan supporting apparatus may further comprise a registration selecting section that, when the power difference amount information indicates that the power usage amount is less than the planned power amount, allows the power consumer to select whether to register the index value in the compensation information holding section as the conversion value; and a first plan adjusting section that, when the selection is to not perform registration in the compensation information holding section, causes the power cost converting section to convert the index value into a power amount usable during the other unit interval that is later than the one unit interval, based on the conversion coefficient for the other unit interval, and adjusts a power usage plan for the power consumer by increasing the planned power amount planned for the other unit interval, based on the power amount resulting from the conversion.

The power plan supporting apparatus may further comprise a first adjustment selecting section that, when the selection is to not perform registration in the compensation information holding section, allows the power consumer to select whether to cause the first plan adjusting section to adjust the power usage plan, and when the selection is to not adjust the power usage plan, the first plan adjusting section need not adjust the power usage plan. The first plan adjusting section may adjust the power usage plan such that total planned power amount or greenhouse gas emission amount set in the power usage plan is less than or equal to an upper limit.

The power plan supporting apparatus may further comprise a first priority information holding section that holds first priority information indicating priority of power usage for each of a plurality of power loads of the power consumer, and the first plan adjusting section may adjust the power usage plan based on the first priority information.

The power plan supporting apparatus may further comprise a compensating section that, when the power difference amount information indicates that the power usage amount is greater than the planned power amount, compensates the index value by using the conversion value registered in the compensation information holding section.

The power plan supporting apparatus may further comprise a compensation selecting section that, when the power difference amount information indicates that the power usage amount is greater than the planned power amount, allows the power consumer to select whether to cause the compensating section to compensate the index value by using the conversion value registered in the compensation information holding section; and a second plan adjusting section that, when the selection is to not compensate the index value, causes the power cost converting section to convert the index value into a power reduction amount for the other unit interval that is later than the one unit interval, based on the conversion coefficient for the other unit interval, and adjusts a power usage plan for the power consumer by decreasing the planned power amount planned for the other unit interval, based on the power amount resulting from the conversion.

The power plan supporting apparatus may further comprise a second adjustment selecting section that, when the selection is to not compensate the index value, allows the power consumer to select whether to cause the second plan adjusting section to adjust the power usage plan, and when the selection is to not adjust the power usage plan, the second plan adjusting section need not adjust the power usage plan. The second plan adjusting section adjusts the power usage plan such that total planned power amount or greenhouse gas emission amount set in the power usage plan is less than or equal to an upper limit.

The power plan supporting apparatus may further comprise a second priority information holding section that holds second priority information indicating priority of power usage for each of a plurality of power loads of the power consumer, and the second plan adjusting section may adjust the power usage plan based on the second priority information.

The summary clause does not necessarily describe all necessary features of the embodiments of the present invention. The present invention may also be a subcombination of the features described above.

### BRIEF DESCRIPTION OF THE DRAWINGS

Fig. 1 shows a configuration of a power plan supporting system according to an embodiment of the present invention.
Fig. 2 shows function blocks of the power plan supporting apparatus.
Fig. 3 shows exemplary priority information.
Fig. 4 shows exemplary power company information.
Fig. 5 shows exemplary power cost information.
Fig. 6 is used to describe the process for creating a power usage plan.
Fig. 7 shows function blocks of the power demand managing section.
Fig. 8 is a flowchart of the restriction control performed by the power demand managing section.
Fig. 9 shows exemplary electric report information that is presented to the power consumer by the restriction notifying section.
Fig. 10 shows function blocks of the power usage plan managing section.
Fig. 11 is a flowchart relating to the adjustment of the power usage plan.
Fig. 12 is a flowchart of the power usage plan adjustment performed when the cumulative power difference amount is used as the parameter.
Fig. 13 is a flowchart of the power usage plan adjustment performed when the cumulative first index value is used as the parameter.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

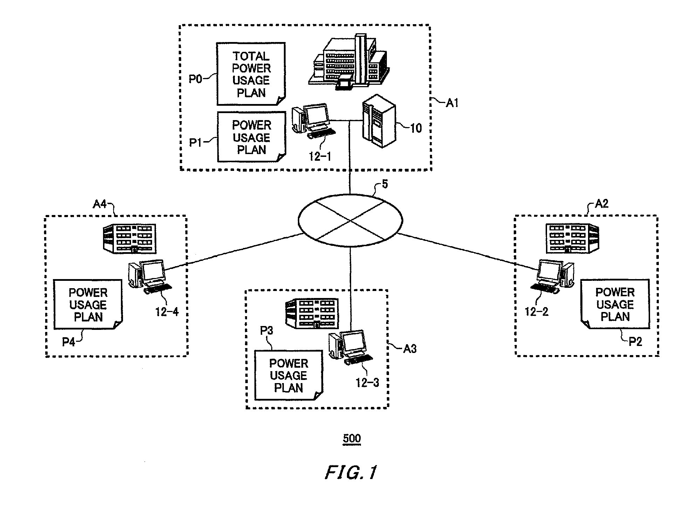

Fig. 1 shows a configuration of a power plan supporting system 500 according to an embodiment of the present invention. The power plan supporting system 500 includes a power plan supporting apparatus 10 and a plurality of terminals 12-1, 12-2, 12-3, and 12-4 connected via a network 5. The terminals 12-1, 12-2, 12-3, and 12-4 may be referred to collectively as the "terminals 12."

The power plan supporting apparatus 10 and the terminal 12-1 are arranged in a first operational base A1 of a first power consumer. The terminal 12-2 is arranged in a second operational base A2 of a second power consumer. The terminal 12-3 is arranged in a third operational base A3 of a third power consumer. The terminal 12-4 is arranged in a fourth operational base A4 of a fourth power consumer. In the present embodiment, the first, second, third, and fourth power consumers form one group. The first operational base A1 of the first power consumer is the headquarters of the group, for example, and the second operational base A2 of the second power consumer, the third operational base A3 of the third power consumer, and the fourth operational base A4 of the fourth power consumer are branches of the group, for example.

The first, second, third, and fourth power consumers each manage their own power usage amounts according to respective predetermined power usage plans P1, P2, P3, and P4. Furthermore, the first power consumer manages the overall group power usage amount, according to a total power usage plan P0 indicating the power usage plan of the overall group. The power usage plans P0 to P4 each indicate a planned power amount that serves as a target for each unit interval within a predetermined planned period. Here, the planned period may be one year, for example, and each unit interval may be 30 minutes. In a case where the goal is to limit at least one of power cost and greenhouse gas emission amount to a predetermined value, the power usage plans P0 to P4 also indicate the planned power cost or planned emission amount serving as the target for each unit interval in the predetermined planned period. The power usage plans P0 to P4 may be determined in advance by one of the first, second, third, and fourth power consumers. The power usage plans P0 to P4 may be determined in advance by a third party, such as a power supply company, that is not one of the first, second, third, or fourth power consumers.

The power plan supporting apparatus 10 supports the usage of power by the power consumers according to the power usage plans. The power plan supporting apparatus 10 supports achievement of the total power usage plan P0 for the overall group, while referencing the power usage amount of each of the power consumers.

The power plan supporting apparatus 10 provides the terminals 12 with information indicating the power usage plans of the operational bases. For example, the power plan supporting apparatus 10 may transmit to the terminals 12 image information that shows the planned power amount and predicted power amount, which is predicted for the following day based on the actual power usage in the past, for each unit interval arranged in time sequence. Furthermore, the power plan supporting apparatus 10 may provide the terminal 12-1 of the first operational base A1 with information indicating the total power usage plan P0. The power plan supporting apparatus 10 may transmit to the terminals 12 image information that includes a bar graph in which the planned power amount for the entire group and the predicted power amount for the entire group on the following day are shown for each unit interval arranged in time series.

The power plan supporting apparatus 10 may transmit to the terminals 12 image information including a bar graph in which the planned power amount and predicted power amount for the entire group are shown such that the planned power amount and predicted power amount of each operational base are distinguished with different colors or patterns. By distinguishing the planned power amount and predicted power amount of each operational base, the power consumers can individually check the planned power amount and predicted power amount for each operational base. Furthermore, the power plan supporting apparatus 10 may transmit to the terminals 12 image information including a bar graph in which the planned power amount for the current day and the confirmed power usage amount up to the current time for each operational base or the entire group are shown for each unit interval arranged in time series. By referencing the image information displayed in the screens of the terminals 12, the power consumers can check the power usage state for the current day or the power usage state for the following day.

The power plan supporting apparatus 10 supports achievement of the power usage plans of the power consumers by implementing a so-called "demand response." For example, when a prediction power amount for the following day exceeds the planned power amount shown in the power usage plan, the power plan supporting apparatus 10 may encourage restriction of power usage by the power consumers by notifying the power consumers of this fact in advance through the terminals 12 using e-mail. Furthermore, when the prediction power amount exceeds the planned power amount, the power plan supporting apparatus 10 may perform control to restrict the power usage of devices for which power restriction control has been permitted. In this way, the power plan supporting apparatus 10 supports the achievement of the power usage plan by the power consumers.

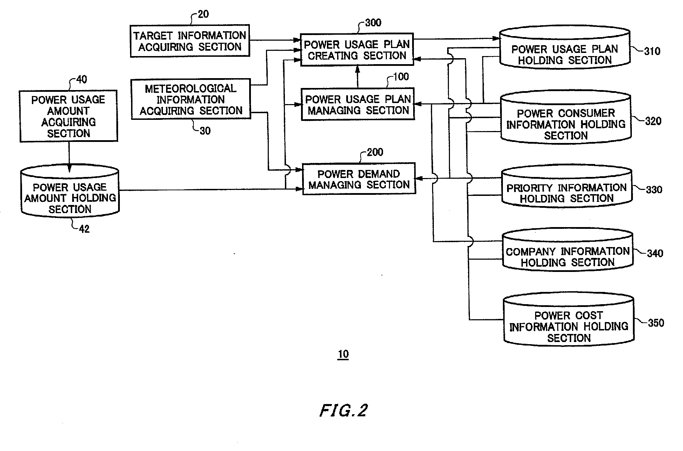

Fig. 2 shows function blocks of the power plan supporting apparatus 10. The power plan supporting apparatus 10 includes a target information acquiring section 20, a meteorological information acquiring section 30, a power usage amount acquiring section 40, a power usage amount holding section 42, a power usage plan managing section 100, a power demand managing section 200, a power usage plan creating section 300, a power usage plan holding section 310, a power consumer information holding section 320, a priority information holding section 330, a company information holding section 340, and a power cost information holding section 350.

The target information acquiring section 20 acquires a reduction rate for the target power amount, power cost, and greenhouse gas during the planned period. For example, the target information acquiring section 20 may acquire each reduction rate by receiving an input of a reduction rate from the power consumer via the terminals 12. The meteorological information acquiring section 30 acquires meteorological information relating to reports of weather conditions that could cause a change in the power amount. For example, the meteorological information acquiring section 30 may acquire the meteorological information from a server providing this information via the network 5. The power usage amount acquiring section 40 acquires consumed power information indicating the power usage during each unit interval or each period shorter than the unit interval, e.g. each 15-minute period, from the power consumers via the network 5, and registers this information in the power usage amount holding section 42. The power usage amount holding section 42 holds the power usage amount information provided from the power usage amount acquiring section 40, in association with date and time information and power consumer identification information that identifies the power consumer.

The power usage plan holding section 310 holds the total power usage plan and the power usage plans generated by the power usage plan creating section 300. The power consumer information holding section 320 holds power consumer information relating to the power consumers. For example, the power consumer information holding section 320 may hold, as the power consumer information, contact information for the power consumers such as a phone number, e-mail address, and means for contacting the power consumers when the power plan supporting apparatus 10 implements a demand response. The priority information holding section 330 holds, for each power consumer, priority information indicating power usage priority of devices arranged in the operational base of the power consumer. The priority information holding section 330 is an example of a first priority information holding section that holds first priority information indicating the power usage priority for each of a plurality of power loads of a power consumer and a second priority information holding section that holds second priority information indicating the power usage priority for each of a plurality of power loads of a power consumer.

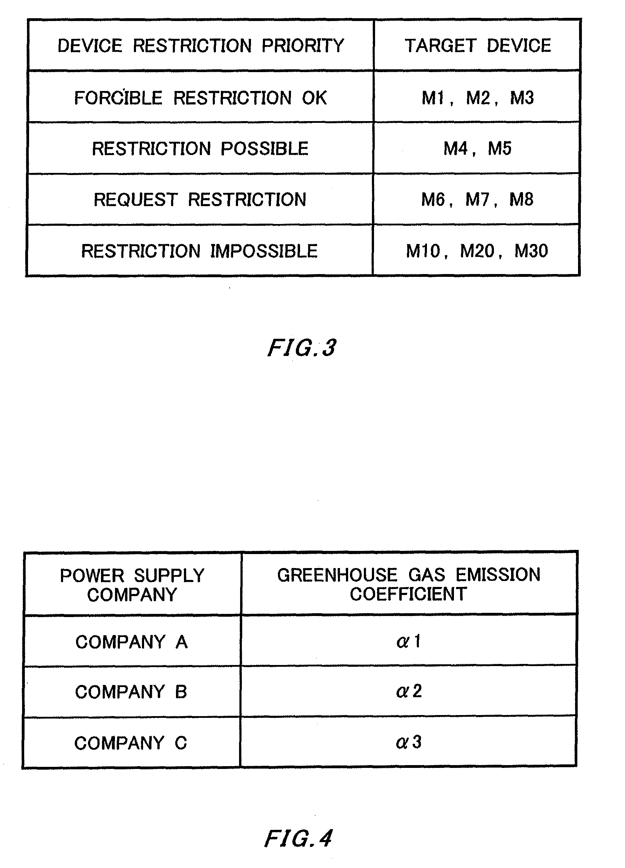

The priority information holding section 330 holds device identification information that identifies target devices in association with the power usage priority of the devices arranged in the operational base of the power consumer, as shown in Fig. 3, for example. More specifically, the priority information holding section 330 holds device identification information M1, M2, and M3 in association with a priority indicating that, when the power usage amount will exceed the planned power amount, the power to the devices can be forcibly restricted even if the power plan supporting apparatus 10 has not received permission to do so from the power consumer. The priority information holding section 330 holds device information identification M4 and M5 in association with a priority indicating that, when the power usage amount will exceed the planned power amount, the power to the devices can be restricted if the power plan supporting apparatus 10 has received permission to do so from the power consumer. The priority information holding section 330 holds device identification information M6, M7, and M8 in association with a priority indicating that, when the power usage amount will exceed the planned power amount, the power plan supporting apparatus 10 can notify the power consumer of this fact and encourage power restriction. The priority information holding section 330 holds device identification information M10, M20, and M30 in association with a priority indicating that, even when the power usage amount will exceed the planned power amount, the power to the devices cannot be restricted.

The company information holding section 340 holds, for each power supply company, emission coefficient information indicating an emission coefficient α (emission amount per kwh) that indicates the amount of greenhouse gas emission per unit of power usage when calculating the greenhouse gas emission amount, as shown in Fig. 4. For example, the company information holding section 340 holds greenhouse gas emission coefficients α1, α2, and α3 respectively in association with power supply companies A, B, and C from which the power consumers receive power. If each power consumer receives power from a plurality of power supply companies, the company information holding section 340 may hold emission coefficients obtained by multiplying the generally published emission coefficients by the usage ratios of the respective power companies.

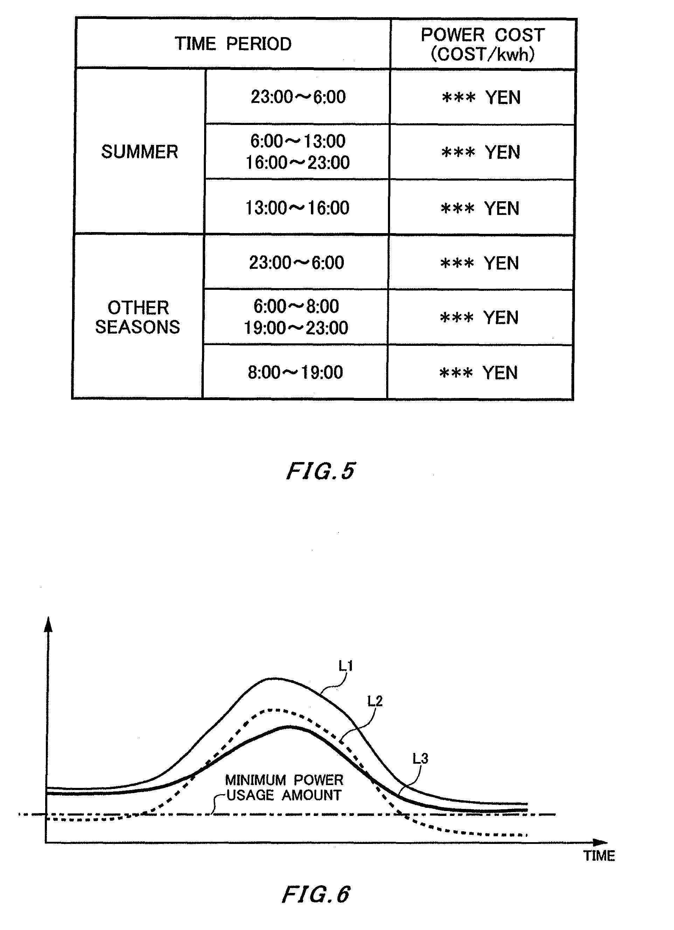

The power cost information holding section 350 holds cost information that indicates power cost (cost per kwh) per unit of power usage when calculating the power cost, as shown in Fig. 5. For example, the power cost information holding section 350 may hold information indicating the power cost per unit of power usage for each of a plurality of time periods and seasons.

The power usage plan creating section 300 generates a total power usage plan for the group and power usage plans for the plurality of power consumers. For example, the power usage plan creating section 300 may acquire past power usage information, such as the power usage amount from the previous year, for a power consumer to receive a plan held in the power usage amount holding section 42. The power usage plan creating section 300 calculates an average power usage amount per day, based on the power usage amount for the previous year. If the target for the power consumer is to reduce power cost, the power usage plan creating section 300 calculates the average power cost per day, based on the average power usage amount per day and the cost per unit of power usage acquired from the power cost information holding section 350. If the target for the power consumer is to reduce the greenhouse gas emission amount, the power usage plan creating section 300 calculates an average greenhouse gas emission amount per day, based on the average power usage per day and the emission coefficient of each power supply company held by the company information holding section 340. In this case, the power usage plan creating section 300 may calculate the average emission amount by adding together the emission coefficients of each power supply company and multiplying the resulting sum of emission coefficients by the average power usage amount per day.

If the target for the power consumer is to reduce the power usage amount during the planned period, the power usage plan creating section 300 acquires information indicating a reduction rate for the power usage amount to reach the target, from the target information acquiring section 20. If necessary, the power usage plan creating section 300 acquires information indicating a reduction rate for emission amount or power cost in order to reach the target, from the target information acquiring section 20. For example, the power usage plan creating section 300 may set a planned power amount for each unit interval within the planned period, based on the reduction rate for the power usage amount to reach the target and the average power usage amount. In this way, the power usage plan creating section 300 creates the power usage plans for the power consumers. The power usage plan creating section 300 may adjust the power usage plans based on the meteorological information acquired from the meteorological information acquiring section 30.

For each power consumer, a minimum power usage amount is determined by adding together the maintenance power amount that indicates the minimum power necessary to maintain the equipment of the power consumer and a total power amount for the devices that cannot undergo power restriction. The minimum power usage amount includes the power amount for emergency lighting, the standby power amount for equipment, and the like. The minimum power usage amount indicates the minimum power amount below which the power usage amount cannot be reduced.

For example, as shown by the curve L1 in Fig. 6, when the power usage plan creating section 300 multiplies the reduction rate of the power usage amount uniformly for each unit interval by the planned power amount for each unit interval in a single day set from the average power usage amount, there is a chance that the planned power amount for each unit interval after reduction will be less than the minimum power usage amount for the power consumer during a partial time period, as shown by the curve L2. Therefore, the power usage plan creating section 300 generates a power usage plan that causes the planned power amount for each unit interval to be greater than or equal to the minimum power usage amount of the power consumer for whom the plan is intended, as shown by the curve L3. The power consumer information holding section 320 may hold information indicating the maintenance power amount for each power consumer. Furthermore, the priority information holding section 330 may hold the power usage amount for each device in association with device identification information that identifies devices for which power restriction cannot be performed. In this case, the power consumer information holding section 320 may acquire the minimum power usage amount for each operational base by acquiring the maintenance power information for a power consumer for whom the plan is intended from the power consumer information holding section 320, acquiring the power usage amount of each device on which power restriction cannot be performed for the power consumer that is a target for the plan from the priority information holding section 330, and multiplying the acquired power amounts together.

Furthermore, when the target of the power consumer for whom the plan is intended is to reduce the power cost or greenhouse gas emission amount, the power usage plan creating section 300 adjusts the power usage plan to have values no greater than the upper limits for power cost or greenhouse gas emission amount determined from the reduction rate that achieves the target.

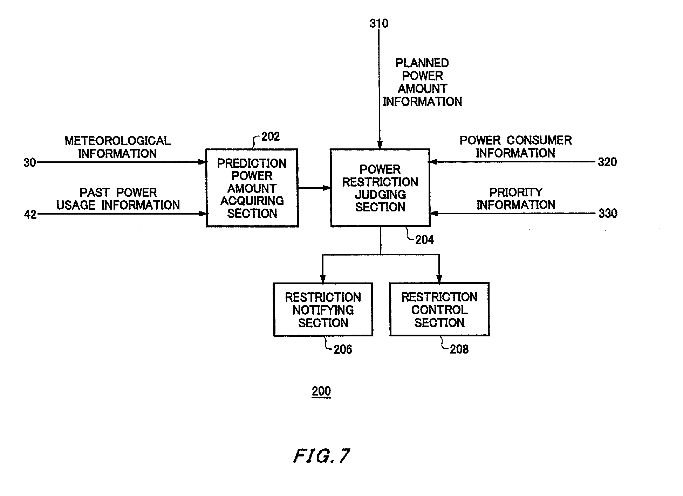

Fig. 7 shows function blocks of the power demand managing section 200. The power demand managing section 200 includes a power amount predicting section 202, a power restriction judging section 204, a restriction notifying section 206, and a restriction control section 208. The power amount predicting section 202 acquires a past power usage amount during a prediction target period of a power consumer for which a predictions is to be made, from the power usage amount holding section 42. The power amount predicting section 202 acquires meteorological information for the prediction target period from the meteorological information acquiring section 30. The power amount predicting section 202 predicts a prediction power amount for a time that is one day, one hour, or 15 minutes later, for example, based on the acquired past power usage amount and meteorological information.

The power restriction judging section 204 acquires the prediction power amount from the power amount predicting section 202. Furthermore, the power restriction judging section 204 acquires the planned power amount for the prediction target period from the power usage plan holding section 310. The power restriction judging section 204 judges whether the power restriction of devices is necessary during the prediction target period, based on a comparison between the prediction power amount and the planned power amount. Furthermore, the power restriction judging section 204 acquires priority information for each device of the power consumer for which the prediction is being made, from the priority information holding section 330. The power restriction judging section 204 determines which device is to be a target for a power restriction request, based on the priority information. When a power restriction request is to be issued for a device, the power restriction judging section 204 acquires information concerning a means for contacting the power consumer for which the prediction is being made, from the power consumer information holding section 320. Furthermore, the power restriction judging section 204 determines devices on which power restriction is performed, based on the priority information. For example, when the prediction power amount for a time 15 minutes later exceeds the planned power amount for a time 15 minutes later, the power restriction judging section 204 determines that power restriction will be performed on a device.

The restriction notifying section 206 notifies the power consumer for which the prediction is being made that power restriction will be performed for a device during the prediction target period, based on instructions from the power restriction judging section 204. For example, the restriction notifying section 206 may provide e-mail notification including power prediction information that indicates which devices will undergo power restriction during which periods. The restriction control section 208 performs power restriction on the devices that are power restriction targets of the power consumer for which the prediction is being made, based on instructions from the power restriction judging section 204. For example, the restriction control section 208 may turn off the power supplies of devices that are power restriction targets. As another example, the restriction control section 208 may change the operational mode of devices that are power restriction targets to an operational mode that consumes less power than the current operational mode.

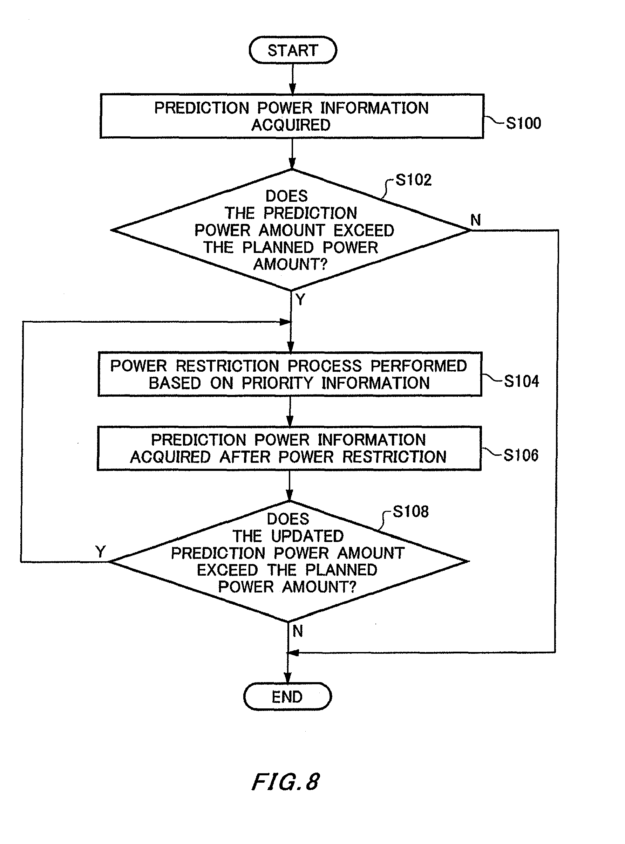

Fig. 8 is a flowchart of the restriction control performed by the power demand managing section 200. The power restriction judging section 204 acquires prediction information for a time that is one day, 30 minutes, or 15 minutes later, as predicted by the power amount predicting section 202 (S100). The power restriction judging section 204 acquires the planned power amount in the prediction target period from the power usage plan holding section 310, and judges whether the acquired planned power amount exceeds the prediction power amount (S102). If the acquired planned power amount exceeds the prediction power amount, the power restriction judging section 204 performs a power restriction control process based on the priority information (S104). For example, if the prediction target period is the following day, the power restriction judging section 204 may instruct the restriction notifying section 206 to provide e-mail notification including information that indicates which devices will undergo power restriction during which periods, based on the priority information. Furthermore, based on the priority information, the power restriction judging section 204 may instruct the restriction notifying section 206 to provide e-mail notification including warning information that indicates which devices will undergo power restriction during which period in a case where the current usage state of the devices continues. Furthermore, if the prediction target period is 15 minutes later, the power restriction judging section 204 instructs the restriction control section 208 concerning which devices to perform power restriction on during which periods, based on the priority information.

Next, after the power restriction process has been performed, the power restriction judging section 204 again acquires prediction power information for a time that is one day, 30 minutes, or 15 minutes later, as predicted by the power amount predicting section 202 (S106). The power restriction judging section 204 judges whether the newly acquired prediction power amount exceeds the planned power amount (S108). If the newly acquired prediction power amount exceeds the planned power amount, the power restriction judging section 204 performs the power restriction process again based on the priority information.

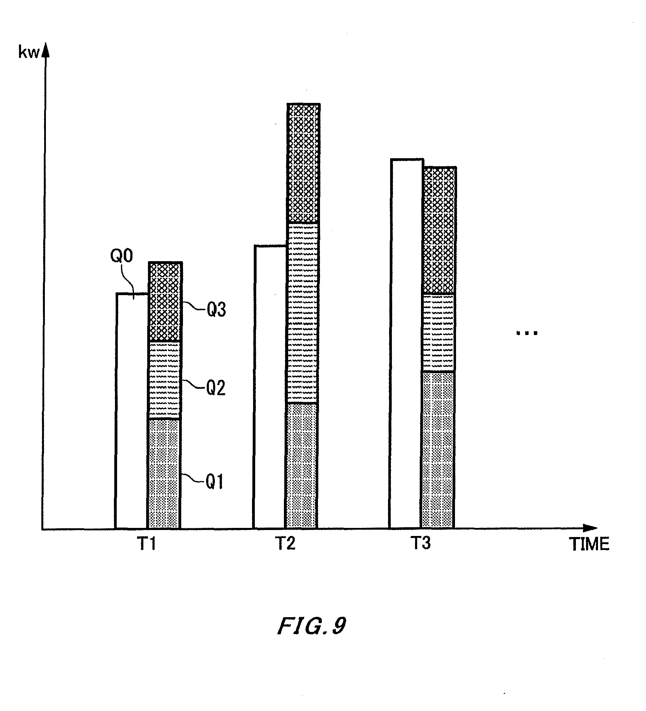

Fig. 9 shows a relationship between the planned power amount at unit intervals T1, T2, and T3 and the prediction power amount predicted for the unit intervals T1, T2, and T3 of the following day. The information indicating the prediction power amount includes the minimum power usage amount Q1, the power amount Q2 of devices that can undergo power restriction if permission is received from the power consumer, and the power amount Q3 of devices that can undergo power restriction even if permission is not received from the power consumer. By comparing the prediction power amount to the planned power amount, the power restriction judging section 204 judges that the power usage amount can be kept below the planned power amount at the unit interval T1 by restricting the power of only the devices that forcibly undergo power restriction when the power usage amount is expected to exceed the planned power amount, for example. Furthermore, the power restriction judging section 204 judges that the power usage amount can be kept below the planned power amount at the unit interval T2 by again restricting the power of the devices that can forcibly undergo power restriction without receiving permission and also restricting the power of devices for which permission is received from the power consumer. The power restriction judging section 204 judges that the power usage amount can be kept below the planned power amount at the unit interval T3 without performing any power restriction.

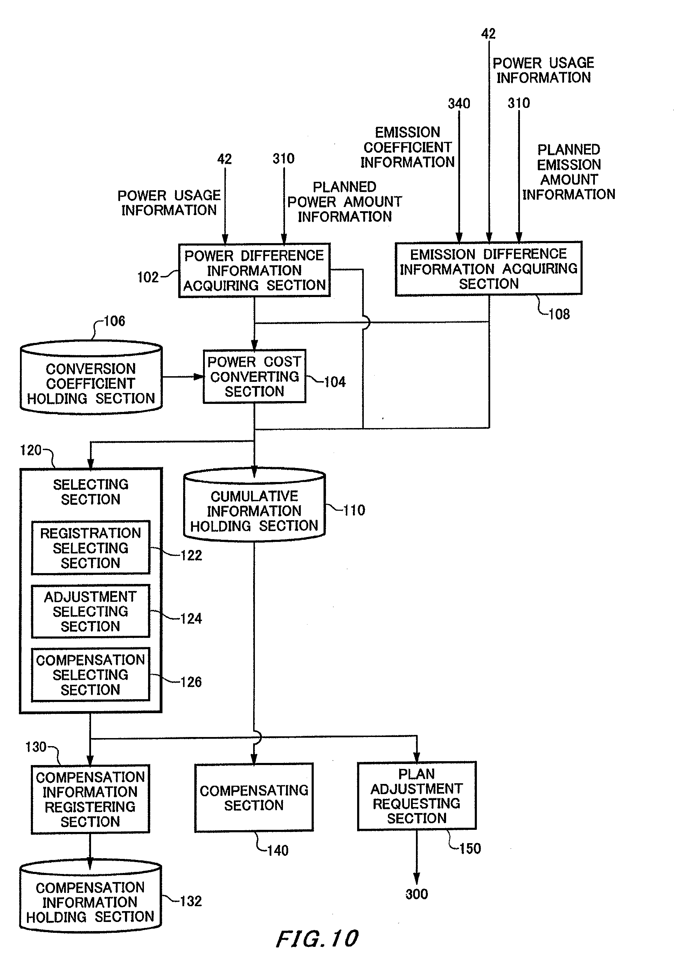

Fig. 10 shows function blocks of the power usage plan managing section 100. The power usage plan managing section 100 includes a power difference information acquiring section 102, a power cost converting section 104, a conversion coefficient holding section 106, an emission difference information acquiring section 108, a cumulative information holding section 110, a selecting section 120, a compensation information registering section 130, a compensation information holding section 132, a compensating section 140, and a plan adjustment requesting section 150.

The power difference information acquiring section 102 acquires power difference amount information indicating the power difference amount between the planned power amount that was planned in advance for a unit interval within the planned period of the power usage plan by the power consumer and the power usage amount that is actually used during the unit interval. For example, the power difference information acquiring section 102 may acquire power usage amount information for each unit interval from the power usage amount holding section 42. Furthermore, power difference information acquiring section 102 acquires the planned power amount information for each unit interval from the power usage plan holding section 310. The power difference information acquiring section 102 calculates the power difference amount for each unit interval by subtracting the power usage amount from the planned power amount of the unit interval, based on the acquired information.

The emission difference information acquiring section 108 acquires the power usage amount information for each unit interval from the power usage amount holding section 42. The emission difference information acquiring section 108 acquires the emission coefficients from the company information holding section 340 and calculates the usage emission amount by multiplying the power usage amount by the emission coefficients. Furthermore, the emission difference information acquiring section 108 acquires a planned emission amount indicating the greenhouse gas emission amount that is planned for each unit interval, from the power usage plan holding section 310. The emission difference information acquiring section 108 calculates an emission difference amount by subtracting the usage emission amount from the planned emission amount.

The power cost converting section 104 converts the power difference amount indicated by the power difference amount information into a first index value indicating the power cost of the power difference amount in the unit interval, based on a first conversion coefficient that is determined in advance according to the power cost value of the unit interval held by the conversion coefficient holding section 106. Here, the power cost value changes according to the period of use. For example, in the buying and selling of power, the cost of power is higher during periods when the amount of power demanded is higher. On the other hand, in recent years, due to environmental concerns, power consumers are encouraged to decrease the amount of power used in order to lower the amount of power supplied. Under these conditions, reducing power usage during a peak time during which a large number of power consumers want to use power results in a greater decrease in the supplied power than reducing power usage during off-peak times. Accordingly, restricting power usage during peak times has more benefits for energy conservation and environmental protection than restricting power usage during off-peak times. For example, even if the same power amount reduction rate is used, the benefits to society are greater when the power amount reduction is performed during a period when the amount of power demanded is high. However, it is impossible to evaluate a difference in benefit due to a difference in power reduction implementation periods merely by evaluating the power saving obtained by a power reduction compared to only the prior year.

Therefore, as a value that enables easy evaluation of the benefits of power saving, the power cost converting section 104 calculates the first index value serving as an index for benefits due to power saving in a unit interval, based on the first conversion coefficient determined according to the power cost during the unit interval. Even during the same period, the power cost may change due to meteorological conditions. For example, the power demand during a sunny day in summer is higher than the power demand during a cloudy day in summer. Accordingly, restricting the power during a sunny day in summer has a greater benefit with respect to power saving than restricting the power on a cloudy day in summer. From this point of view, the first conversion coefficient may be a value determined in advance according to at least one of the power demand during the unit interval corresponding to the first conversion coefficient, the power cost during the unit interval corresponding to the first conversion coefficient, and the meteorological conditions during the unit interval corresponding to the first conversion coefficient.

The first conversion coefficient is determined in a manner to cause the first index value to be higher when the reduction in power usage is greater during a period when the power cost is high. The first conversion coefficient may be determined based on an electricity report that indicates the cost of power traded by power exchangers, the predicted future power demand to be supplied by power companies, and the like. Furthermore, the first conversion coefficient may be determined according to the cost of power as determined by an auction with a predetermined format. For example, the first conversion coefficient may be determined according to the cost of power as determined according to a single price auction or double price auction using a call option or a put option.

Furthermore, there are cases where the greenhouse gas emission amount changes according to the period of use. For example, in a case where pieces of power generation equipment creating different amounts of greenhouse gas emissions are used during different periods, the benefit with respect to reducing greenhouse gas emission amount differs according to the period during which the power is restricted. Accordingly, the conversion coefficient holding section 106 may store a second conversion coefficient for calculating a second index value that indicates the benefit with respect to the reduction of greenhouse gas emission. The power cost converting section 104 may calculate the second index value, which indicates the benefit with respect to reducing greenhouse gas emission, by multiplying the emission amount difference by the second conversion coefficient. The second conversion coefficient used for greenhouse gas is determined in a manner to cause the second index value to be higher when the reduction in power usage is greater during a period when the amount of greenhouse gas emission is high.

The cumulative information holding section 110 holds a cumulative power difference amount obtained by accumulating each power difference amount calculated for each of the unit intervals by the power difference information acquiring section 102. The cumulative information holding section 110 holds a first cumulative index value obtained by accumulating each first index value calculated for each of the unit intervals by the power cost converting section 104. The cumulative information holding section 110 holds a cumulative emission difference amount obtained by accumulating each emission difference amount calculated for each of the unit intervals by the emission difference information acquiring section 108. The cumulative information holding section 110 holds a second cumulative index value obtained by accumulating each second index value calculated for each of the unit intervals by the power cost converting section 104.

A positive value for the cumulative power difference amount indicates that the power usage amount is less than the planned power amount. Accordingly, a positive and large value for the cumulative power difference amount indicates that there is a high possibility that the power usage plan that was planned in advance can be achieved by continuing the current power usage state. In other words, even if the power usage amount becomes somewhat greater than the planned power amount in the future, there is still a high possibility that the power usage plan that was planned in advance can be achieved. On the other hand, a negative value for the cumulative power difference amount indicates that the power usage amount is greater than the planned power amount. Accordingly, a negative and large value for the cumulative power difference amount indicates that there is a low possibility that the power usage plan that was planned in advance can be achieved by continuing the current power usage state. In this way, the power consumer can easily understand whether the power usage plan will be achieved, based on the cumulative power difference amount. Furthermore, when the cumulative power difference amount is a positive value, even if the power usage plan is adjusted to increase the future planned power amount, there is a high possibility that the power usage plan will be achieved. Therefore, when the cumulative power difference amount is a positive value, the power usage plan may be adjusted to increase the future planned power amount.

On the other hand, when the cumulative power difference amount is a negative value, in order to achieve the power usage plan, the power usage plan must be adjusted to decrease the future planned power amount. However, there are cases where it is difficult for the power consumer to adjust the power usage plan such that the future planned power amount is decreased. In contrast, there are also cases where another power consumer has a cumulative power difference amount with a positive value and does not need to adjust the power usage plan in a manner to increase the future planned power amount. Furthermore, there are cases where, even if some of the power consumers have not yet achieved their power usage plans, the target for the overall group can be achieved if the total power usage plan for the overall group is ultimately achieved. Therefore, the ultimate achievement of the total power usage plan for the overall group can be supported by providing the power plan supporting apparatus 10 with a function that enables the reset of a cumulative power difference amount with a negative value of a power consumer by using a cumulative power difference amount with a positive value of another power consumer.

To this end, the selecting section 120 enables each power consumer to select whether to adjust their own power usage plan based on the cumulative power difference amount and whether to cooperate with another power consumer to compensate for a negative cumulative power difference amount based on the cumulative power difference amount. When the power difference amount information indicates that the power usage amount is less than the planned power amount, the compensation information registering section 130 registers this power difference amount in the compensation information holding section 132 as a compensation power amount that can be used by another power consumer to be added to another planned power amount planned in advance for a unit interval that is later than the current unit interval. The compensating section 140 compensates a power difference amount by using the compensation power amount registered in the compensation information holding section 132. The plan adjustment requesting section 150 increases or decreases the planned power amount planned in advance for another unit interval later than the current unit interval, based on the power difference amount, and makes a request to the power usage plan creating section 300 to adjust the power usage plan.

The selecting section 120 includes a registration selecting section 122, an adjustment selecting section 124, and a compensation selecting section 126. When the power difference amount information indicates that the power usage amount is less than the planned power amount, the registration selecting section 122 allows a power consumer to select whether the power difference amount is registered in the compensation information holding section 132 as a compensation power amount that can be used by another power consumer to be added to another planned power amount planned in advance for a unit interval that is later than the current unit interval. If the selection is made to not register the power difference amount in the compensation information holding section 132, the adjustment selecting section 124 allows the power consumer to select whether to cause the power usage plan creating section 300 to update the power usage plan. When the power difference amount information indicates that the power usage amount is greater than the planned power amount, the compensation selecting section 126 allows a power consumer to select whether to use the compensating section 140 to compensate the power difference amount by using the compensation power amount registered in the compensation information holding section 132. When the power consumer chooses to not compensate the power difference amount, the adjustment selecting section 124 allows the power consumer to select whether to cause the power usage plan creating section 300 to adjust the power usage plan.

When a request is received from the plan adjustment requesting section 150 and the selection is made to not register the power difference amount in the compensation information holding section 132 using the registration selecting section 122, the power usage plan creating section 300 adjusts the power usage plan in a manner to increase the planned power amount planned in advance for a unit interval that is later than the current unit interval, based on the power difference amount. Furthermore, when the selection is made to not compensate the power difference amount using the compensation selecting section 126, the power usage plan creating section 300 adjusts the power usage plan in a manner to decrease the planned power amount planned in advance for a unit interval that is later than the current unit interval, based on the power difference amount. If a selection is made to not adjust the power usage plan using the adjustment selecting section 124, the power usage plan creating section 300 does not adjust the power usage plan.

If a power cost target or greenhouse gas emission amount target is set in the power usage plan, the power usage plan creating section 300 may adjust the power usage plan such that the power cost or greenhouse gas emission amount set in the power usage plan is less than the upper limit therefore. The power usage plan creating section 300 may adjust the power usage plan based on the priority information held by the priority information holding section 330. When adjusting the power usage plan in a manner to decrease the planned power amount, the power usage plan creating section 300 references the priority information and adjusts the power usage plan while prioritizing the forcible power restriction of devices for which forcible power restriction is possible. On the other hand, when adjusting the power usage plan in a manner to increase the planned power amount, the power usage plan creating section 300 references the priority information and adjusts the power usage plan in a manner to omit devices that can only undergo power restriction if permission is received from the power consumer from the devices that are targets for power restriction.

As described above, the power plan supporting apparatus 10 may support the ultimate achievement of the total power usage plan for the overall group using the power difference amount as a parameter. However, the power plan supporting apparatus 10 may also support the ultimate achievement of the total power usage plan for the overall group using the first index value, which indicates the benefit of power reduction, as a parameter.

When the power difference amount information indicates that the power usage amount is less than the planned power amount, the compensation information registering section 130 registers the first index value in the compensation information holding section 132 as a conversion value that can convert this power difference amount into a compensation power amount that can be used by another power consumer, who is different from the power consumer that uses the above power usage amount, to be added to another planned power amount planned in advance for another unit interval that is later that the current interval. When the power difference amount information indicates that the power usage amount is greater than the planned power amount, the compensating section 140 compensates the index value using the conversion value registered in the compensation information holding section 132.

When the power difference amount information indicates that the power usage amount is less than the planned power amount, the registration selecting section 122 allows the power consumer to select whether to register the first index value in the compensation information holding section 132 as the conversion value. When the selection is made to not register the first index value in the compensation information holding section 132, the adjustment selecting section 124 allows the power consumer to select whether to cause the power usage plan creating section 300 to adjust the power usage plan. When the power difference amount information indicates the power usage amount is greater than the planned power amount, the compensation selecting section 126 allows the power consumer to select whether to cause the compensating section 140 to compensate the previous target value using the conversion value registered in the compensation information holding section 132. When the selection is made to not compensate the index value, the adjustment selecting section 124 allows the power consumer to select whether to cause the power usage plan creating section 300 to adjust the power usage plan.

When the selection is made to not register the conversion value in the compensation information holding section 132, the power usage plan creating section 300 receives a request from the plan adjustment requesting section 150 and causes the power cost converting section 104 to convert the index value into a power amount that can be using in another unit interval later than the current unit interval, based on the conversion coefficient for the other unit interval. Next, the power usage plan creating section 300 adjusts the power usage plan for the power consumer by increasing the planned power amount planned in advance for the other unit interval, based on the power amount resulting from the conversion. When the selection is made to not compensate the index value, the power usage plan creating section 300 receives a request from the plan adjustment requesting section 150 and causes the power cost converting section 104 to convert the index value into a power reduction amount for another unit interval that is later than the current unit interval, based on the conversion coefficient for the other unit interval. Next, the power usage plan creating section 300 adjusts the power usage plan for the power consumer by lowering the planned power amount planned for the other unit interval, based on the power amount resulting from the conversion.

As an example, the power plan supporting apparatus 10 allows a first power consumer to select, via the terminal 12-1, whether to use the power difference amount or the index value as the parameter to be used for ultimately achieving the total power usage plan for the overall group, and stores the selection in the power usage plan holding section 310 in association with the total power usage plan P0 and the power usage plans P1 to P4.

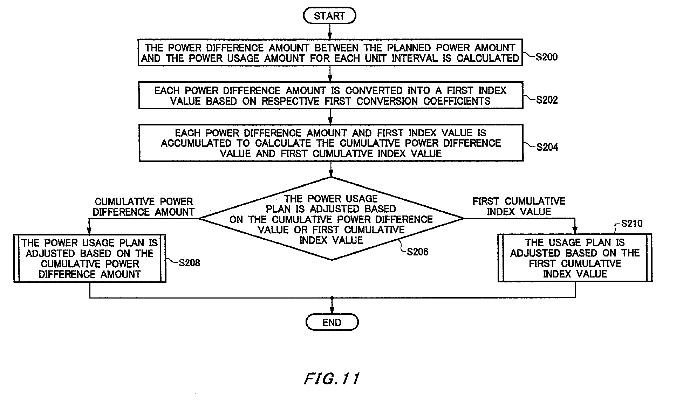

Fig. 11 is a flowchart relating to the adjustment of the power usage plan performed by the power usage plan managing section 100 for each power consumer. The power difference information acquiring section 102 acquires the power usage amount from the power usage amount holding section 42 for each unit interval, and acquires the planned power amount from the power usage plan holding section 310 for each unit interval. Furthermore, the power difference information acquiring section 102 calculates the power amount difference for each unit interval by subtracting the power usage amount from the planned power amount for each unit interval (S200).

The power cost converting section 104 converts each power difference amount into a respective first index value, by multiplying the power difference amount for each unit interval by the first conversion coefficient of the same unit interval (S202). The power difference information acquiring section 102 accumulates the calculated power difference amounts in one-day units, for example, and registers the cumulative power difference amount in the cumulative information holding section 110. The power cost converting section 104 may accumulate each first conversion coefficient in one-day units, and register a first cumulative index value in the cumulative information holding section 110.

Next, the selecting section 120 judges whether to adjust the power usage plan using the cumulative power difference amount or the first cumulative index value as the parameter to be used in order to ultimately achieve the total power usage plan for the overall group (S206). When the cumulative power difference amount is used, the selecting section 120 acquires the information indicating the cumulative power difference amount from the cumulative information holding section 110 and adjusts the power usage plan based on the cumulative power difference amount (S208). On the other hand, when the first cumulative index value is used, the selecting section 120 acquires information indicating the first cumulative index value from the cumulative information holding section 110 and adjusts the power usage plan based on the first cumulative index value (S210).

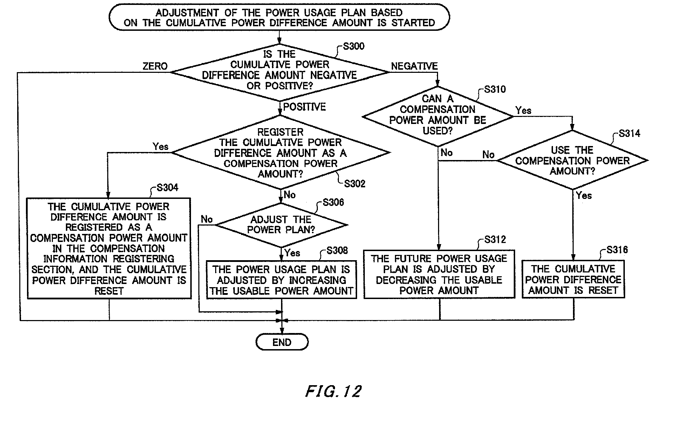

Fig. 12 is a flowchart of the power usage plan adjustment performed by the power usage plan managing section 100 when the cumulative power difference amount is used as the parameter.

The selecting section 120 judges whether the current cumulative power difference amount held in the cumulative information holding section 110 is a positive or negative value, in response to instructions from the power consumer or according to a predetermined judgment cycle, e.g. once a day (S300). When the cumulative power difference amount is zero, the selecting section 120 judges that power is being used according to the power usage plan at the current time, and the process is finished. When the cumulative power difference amount is positive, the registration selecting section 122 questions the power consumer as to whether the cumulative power difference amount should be registered in the compensation information holding section 132 as a compensation power amount that can be used by another power consumer (S302). The power consumer receives information including this question at the terminal 12 of their operational base, for example, via the network 5, and responds through the terminal to the power plan supporting apparatus 10 via the network 5 with information indicating whether to make the registration. When the registration selecting section 122 receives a response from the power consumer stating that registration should be made in the compensation information holding section 132, the compensation information registering section 130 registers the cumulative power difference amount in the compensation information holding section 132 as a compensation power amount. Furthermore, the compensation information registering section 130 resets the cumulative power difference amount by setting the cumulative power difference amount registered in the cumulative information holding section 110 to zero (S304).

On the other hand, when the registration selecting section 122 receives a response from the power consumer stating that registration should not be made in the compensation information holding section 132, the adjustment selecting section 124 questions the power consumer as to whether to adjust the power usage plan using the cumulative power difference amount (S306). When the adjustment selecting section 124 receives a response from the power consumer stating that the power usage plan should be updated, the plan adjustment requesting section 150 sends a request to the power usage plan creating section 300 to adjust the power usage plan using the cumulative power difference amount. The power usage plan creating section 300 adjusts the power usage plan by increasing the planned power amount planned in advance for another unit interval that is later than the current unit interval, based on the power difference amount (S308).

The power usage plan creating section 300 detects a unit interval for which the power difference amount between the planned power amount and the predicted power amount is less than a predetermined reference power amount, for example. The power usage plan creating section 300 adjusts the power usage plan by increasing the planned power amount for the detected unit interval based on the power difference amount. As a result, the difference between the predicted power amount and the total power amount is greater after the adjustment than before the adjustment, and therefore the probability that the power usage amount will exceed the planned power amount can be decreased. Furthermore, the power usage plan creating section 300 may question the power consumer as to which unit interval the power consumer wants to increase the usable power during. In this case the power usage plan creating section 300 increases the planned power amount for the unit interval designated by the power consumer, based on the power difference amount. On the other hand, when the adjustment selecting section 124 receives a response from the power consumer stating that the power usage plan should not be adjusted, the power usage plan creating section 300 does not adjust the power usage plan. The cumulative power difference amount registered in the cumulative information holding section 110 is then maintained as-is. In this case, the power difference information acquiring section 102 updates the cumulative power difference amount by adding the newly calculated cumulative power difference amount to the cumulative power difference amount already registered in the cumulative information holding section 110.

When the cumulative power difference amount is a negative value, the selecting section 120 judges whether a compensation power amount that can compensate the negative cumulative power difference amount in the compensation information registering section 130 is registered in the compensation information holding section 132 (S310). When a usable compensation power amount is not registered in the compensation information holding section 132, the plan adjustment requesting section 150 issues a request to the power usage plan creating section 300 to adjust the power usage plan in a manner to cancel out the cumulative power difference amount. The power usage plan creating section 300 adjusts the power usage plan by decreasing the planned power amount planned in advance for another unit interval later than the current unit interval, based on the power difference amount. The power usage plan creating section 300 questions the power consumer as to which unit interval the usable power amount can be decreased during, and decreases the planned power amount for the unit interval designated by the power consumer based on the power difference amount.

When a usable compensation power amount is registered in the compensation information holding section 132, the compensation selecting section 126 questions the power consumer as to whether to compensate the power difference amount using the compensation power amount. When the compensation selecting section 126 receives a response from the power consumer stating that compensation should not be performed, the plan adjustment requesting section 150 issues a request to the power usage plan creating section 300 to adjust the power usage plan in a manner to cancel out the cumulative power difference amount. On the other hand, when the compensation selecting section 126 receives a response from the power consumer stating that compensation should be performed, the compensating section 140 resets the cumulative power difference amount by setting the cumulative power difference amount to zero using the compensation power amount (S316). By setting the cumulative power difference amount to zero using the compensation power amount, even when the power usage amount at the current time exceeds the planned power amount, the power consumer can proceed without having the power usage plan creating section 300 adjust the power usage plan in a manner to decrease the planned power amount at later unit intervals. The positive power difference amount corresponds to the excess power amount created from the power saving performed by other power consumers in the group. Accordingly, the current total power usage amount for the overall group satisfies the total planned power amount indicated by the total power usage plan, without adjusting the power usage plan of the power consumer whose power difference amount is negative. Therefore, even without adjusting the power usage plan of the power consumer whose power difference amount is negative, there is no increase in the possibility that the total power usage plan for the overall group will ultimately be unachieved.

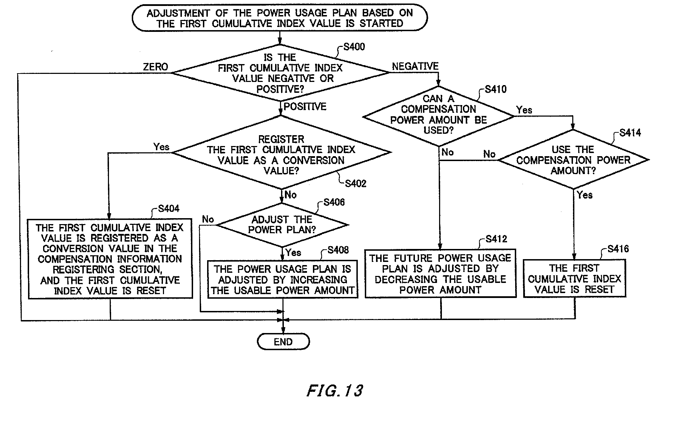

Fig. 13 is a flowchart of the power usage plan adjustment performed by the power usage plan managing section 100 when the first cumulative index value is used as the parameter. The selecting section 120 judges whether the current first cumulative index value registered in the cumulative information holding section 110 is a positive or negative value, in response to instructions from the power consumer or according to a predetermined judgment cycle, e.g. once a day (S400). When the first cumulative index value is zero, the selecting section 120 judges that power is being used according to the power usage plan at the current time, and the process is finished. When the first cumulative index value is positive, the registration selecting section 122 questions the power consumer as to whether the first cumulative index value should be registered in the compensation information holding section 132 as a conversion value for compensation that can be used by another power consumer (S402). When the registration selecting section 122 receives a response from the power consumer stating that registration should be made in the compensation information holding section 132, the compensation information registering section 130 registers the first cumulative index value in the compensation information holding section 132 as a conversion value, and resets the first cumulative index value by setting the first cumulative index value registered in the cumulative information holding section 110 to zero (S404).

On the other hand, when the registration selecting section 122 receives a response from the power consumer stating that registration should not be made in the compensation information holding section 132, the adjustment selecting section 124 questions the power consumer as to whether to adjust the power usage plan using the first cumulative index value (S406). When the adjustment selecting section 124 receives a response from the power consumer stating that the power usage plan should be updated, the plan adjustment requesting section 150 sends a request to the power usage plan creating section 300 to adjust the power usage plan using the first cumulative index value. The power usage plan creating section 300 causes the power cost converting section 104 to convert the first cumulative index value into a power amount that can be used during another unit interval that is later than the current unit interval, based on the first conversion coefficient for the other unit interval. Furthermore, the power usage plan creating section 300 adjusts the power usage plan for the power consumer by increasing the planned power amount planned in advance for the other unit interval, based on the power amount resulting from the conversion (S408).

The power usage plan creating section 300 allows the power consumer to select at least one unit interval for which the power consumer wants to increase the usable power amount. The power usage plan creating section 300 questions the power cost converting section 104 concerning the power amount obtained when the first cumulative index value is converted for the selected unit interval. The power cost converting section 104 calculates the usable power amount that is added during this unit interval by dividing the first cumulative index value by the first conversion coefficient for this unit interval, based on the first cumulative index value and the unit interval provided from the power usage plan creating section 300, and provides the calculated usable power amount to the power usage plan creating section 300. The power usage plan creating section 300 adjusts the power usage plan by adding the provided power amount to the planned power amount for the selected unit interval.

On the other hand, when the adjustment selecting section 124 receives a response from the power consumer stating that the power usage plan should not be adjusted, the power usage plan creating section 300 does not adjust the power usage plan. The first cumulative index value registered in the cumulative information holding section 110 is then maintained as-is. In this case, the power difference information acquiring section 102 updates the first cumulative index value by adding the newly calculated first cumulative index value to the first cumulative index value already registered in the cumulative information holding section 110.

When the first cumulative index value is a negative value, the selecting section 120 judges whether a conversion value that can compensate the negative first cumulative index value in the compensation information registering section 130 is registered in the compensation information holding section 132 (S410). When a usable conversion value is not registered in the compensation information holding section 132, the plan adjustment requesting section 150 issues a request to the power usage plan creating section 300 to adjust the power usage plan in a manner to cancel out the first cumulative index value. The power usage plan creating section 300 receives the request from the plan adjustment requesting section 150 and causes the power cost converting section 104 to convert the index value into a power reduction amount for another unit interval later than the current unit interval, based on the conversion coefficient for the other interval. Furthermore, the power usage plan creating section 300 adjusts the power usage plan for the power consumer by decreasing the planned power amount planned in advance for the other unit interval, based on the power amount resulting from the conversion.

The power usage plan creating section 300 allows the power consumer to select at least one unit interval for which the planned power amount can be decreased. The power usage plan creating section 300 questions the power cost converting section 104 concerning the power reduction amount obtained when the first cumulative index value is converted for the selected unit interval. The power cost converting section 104 calculates the power reduction amount that is necessary to cancel out the first cumulative index value in the selected unit interval, based on the first cumulative index value and the first conversion coefficient for the selected unit interval, and provides the calculated power reduction amount to the power usage plan creating section 300. The power usage plan creating section 300 adjusts the power usage plan by subtracting the provided power amount from the planned power amount for the selected unit interval.

When a usable first conversion value is registered in the compensation information holding section 132, the compensation selecting section 126 questions the power consumer as to whether to compensate the negative cumulative power difference amount using the conversion value. When the compensation selecting section 126 receives a response from the power consumer stating that compensation should not be performed, the plan adjustment requesting section 150 issues a request to the power usage plan creating section 300 to adjust the power usage plan in a manner to cancel out the cumulative power difference amount. On the other hand, when the compensation selecting section 126 receives a response from the power consumer stating that compensation should be performed, the compensating section 140 resets the first cumulative index value by setting the first cumulative index value to zero using the conversion coefficient (S416).

When a power consumer compensates their own negative accumulative power difference amount by using a conversion value or compensation power amount generated as the result of power saving by another power consumer, the other power consumer may bill the original power consumer for remuneration corresponding to the magnitude of the conversion value or the compensation power amount. Furthermore, when another power consumer uses a conversion value or compensation power amount generated as the result of power saving by a power consumer, the other power consumer may provide remuneration corresponding to the magnitude of the conversion value or the compensation power amount used to the power consumer that implemented the power savings. The power plan supporting apparatus 10 may calculate the remuneration by multiplying a predetermined cost per unit of conversion value or unit of power by the compensation power amount or the conversion value.

Here, the conversion value is determined based on the power cost per unit interval. A power consumer can ensure a larger conversion value by implementing power saving during a period when the power cost is high. In other words, by implementing power saving during a period when the power cost is high, a power consumer can receive greater remuneration. On the other hand, when a power consumer uses more power during a period when the power cost is high, the negative portion of the first cumulative index value generated by the use of this power is larger. Therefore, in order to cancel out the negative portion of the first cumulative index value, the power consumer can bill a higher price. In this way, by converting the power amount into a power value during a unit interval, each power consumer can restrict the use of large amounts of power during periods when the power demand is high. Furthermore, each power consumer is encouraged to use more power during periods when the power demand is as low as possible. Accordingly, each power consumer can easily benefit from reducing the power demand during peak times.

The power plan supporting apparatus 10 according to the present embodiment may be configured by installing a program that is recorded on a computer readable storage medium and performs the various processes relating to supporting the power usage plans described above, and executing this program on a computer. In other words, the power plan supporting apparatus 10 may be configured by having a computer execute the program that provides the support for the power usage plans, thereby causing the computer to function as the target information acquiring section 20, the meteorological information acquiring section 30, the power usage amount acquiring section 40, the power usage amount holding section 42, the power usage plan managing section 100, the power demand managing section 200, the power usage plan creating section 300, the power usage plan holding section 310, the power consumer information holding section 320, the priority information holding section 330, the company information holding section 340, and the power cost information holding section 350.

The computer includes a variety of memories such as a CPU, a ROM, a RAM, an EEPROM (Registered Trademark), a communications bus, and an interface, and functions as the power plan supporting apparatus 10 by having the CPU sequentially read and execute the programs stored in advance in the ROM as firmware.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.
Due to the period during which energy reduction is performed, the benefit to society caused by the energy reduction can differ. Provided is a power cost converting apparatus comprising a power difference information acquiring section that acquires power difference amount information indicating a power difference amount between a planned power amount planned in advance for one unit interval and a power usage amount that is actually used during the one unit interval; and a power cost converting section that converts the power difference amount indicated by the power difference amount information into an index value indicating worth of the power difference amount in the one unit interval, based on a predetermined conversion coefficient determined according to the power cost during the one unit interval.

## Claims

1. A power cost converting apparatus comprising:
a power difference information acquiring section that acquires power difference amount information indicating a power difference amount between a planned power amount planned in advance for one unit interval and a power usage amount that is actually used during the one unit interval; and
a power cost converting section that converts the power difference amount indicated by the power difference amount information into an index value indicating worth of the power difference amount in the one unit interval, based on a predetermined conversion coefficient determined according to the power cost during the one unit interval.

2. The power cost converting apparatus according to Claim 1, further comprising a conversion coefficient holding section that holds the conversion coefficient for each unit interval, wherein
the conversion coefficient is determined according to at least one of power demand during the one unit interval corresponding to the conversion coefficient, power price during the one unit interval corresponding to the conversion coefficient, and meteorological conditions during the one unit interval corresponding to the conversion coefficient.

3. A power plan supporting apparatus comprising:
the power cost converting apparatus of Claim 1 or 2; and
a compensation information registering section that, when the power difference amount information indicates that the power usage amount is less than the planned power amount, registers the index value in the compensation information holding section as a conversion value that can enable another power consumer, which is different from the power consumer using the power usage amount, to convert the power difference amount into a compensation power amount usable by the other power consumer by being added to another planned power amount of the other power consumer planned in advance for another unit interval that is later than the one unit interval.

4. The power plan supporting apparatus according to Claim 3, further comprising:
a registration selecting section that, when the power difference amount information indicates that the power usage amount is less than the planned power amount, allows the power consumer to select whether to register the index value in the compensation information holding section as the conversion value; and
a first plan adjusting section that, when the selection is to not perform registration in the compensation information holding section, causes the power cost converting section to convert the index value into a power amount usable during the other unit interval that is later than the one unit interval, based on the conversion coefficient for the other unit interval, and adjusts a power usage plan for the power consumer by increasing the planned power amount planned for the other unit interval, based on the power amount resulting from the conversion.

5. The power plan supporting apparatus according to Claim 4, further comprising a first adjustment selecting section that, when the selection is to not perform registration in the compensation information holding section, allows the power consumer to select whether to cause the first plan adjusting section to adjust the power usage plan, wherein
when the selection is to not adjust the power usage plan, the first plan adjusting section does not adjust the power usage plan.

6. The power plan supporting apparatus according to Claim 4 or 5, wherein the first plan adjusting section adjusts the power usage plan such that total planned power amount or greenhouse gas emission amount set in the power usage plan is less than or equal to an upper limit.

7. The power plan supporting apparatus according to any one of Claims 4 to 6, further comprising a first priority information holding section that holds first priority information indicating priority of power usage for each of a plurality of power loads of the power consumer, wherein
the first plan adjusting section adjusts the power usage plan based on the first priority information.

8. The power plan supporting apparatus according to any one of Claims 3 to 7, further comprising a compensating section that, when the power difference amount information indicates that the power usage amount is greater than the planned power amount, compensates the index value by using the conversion value registered in the compensation information holding section.

9. The power plan supporting apparatus according to Claim 8, further comprising:
a compensation selecting section that, when the power difference amount information indicates that the power usage amount is greater than the planned power amount, allows the power consumer to select whether to cause the compensating section to compensate the index value by using the conversion value registered in the compensation information holding section; and
a second plan adjusting section that, when the selection is to not compensate the index value, causes the power cost converting section to convert the index value into a power reduction amount for the other unit interval that is later than the one unit interval, based on the conversion coefficient for the other unit interval, and adjusts a power usage plan for the power consumer by decreasing the planned power amount planned for the other unit interval, based on the power amount resulting from the conversion.

10. The power plan supporting apparatus according to Claim 9, further comprising a second adjustment selecting section that, when the selection is to not compensate the index value, allows the power consumer to select whether to cause the second plan adjusting section to adjust the power usage plan, wherein
when the selection is to not adjust the power usage plan, the second plan adjusting section does not adjust the power usage plan.

11. The power plan supporting apparatus according to Claim 9 or 10, wherein the second plan adjusting section adjusts the power usage plan such that total planned power amount or greenhouse gas emission amount set in the power usage plan is less than or equal to an upper limit.

12. The power plan supporting apparatus according to any one of Claims 9 to 11, further comprising a second priority information holding section that holds second priority information indicating priority of power usage for each of a plurality of power loads of the power consumer, wherein
the second plan adjusting section adjusts the power usage plan based on the second priority information.

13. A computer readable storage medium storing thereon a program for causing a computer to function as the power cost converting apparatus according to Claim 1 or 2.

14. A computer readable storage medium storing thereon a program for causing a computer to function as the power plan supporting apparatus according to any one of Claims 3 to 12.
